# EUROPÄISCHE PATENTSCHRIFT

(11) **EP 1 118 646 B1**
(45) Veröffentlichungstag und Bekanntmachung des Hinweises auf die Patenterteilung: **31.03.2004**
(21) Anmeldenummer: 01100224.3
(22) Anmeldetag: 03.01.2001
(51) Int. Cl.: C09D 171/02, C08F 290/06, C08K 3/18, C08G 65/32

(54) **Beschichtungszusammensetzung mit beschlagverhindernden Eigenschaften**
Anti-fogging coating composition
Composition de revêtement ayant des propriétés anti-buée

(30) Priorität: 18.01.2000 DE 10002059
(43) Veröffentlichungstag der Anmeldung: 25.07.2001
(73) Patentinhaber: Röhm GmbH & Co. KG, 64293 Darmstadt (DE)
(72) Erfinder: Brehm, Manfred, Dr., 63743 Aschaffenburg (DE); Hohage, Heinz-Jürgen, Dr., 64367 Mühltal (DE); Neeb, Rolf, 64319 Pfungstadt (DE)

(56) Entgegenhaltungen:
- EP-A- 0 399 441
- EP-A- 0 444 864
- EP-A- 0 614 921
- EP-A- 0 832 917
- DATABASE WPI Section Ch, Week 197629 Derwent Publications Ltd., London, GB; Class A14, AN 1976-55007X XP002166064 & JP 51 063382 A (KOHKOKU CHEM IND CO LTD) , 1. Juni 1976 (1976-06-01)

## Beschreibung

### Gebiet der Erfindung

Die Erfindung betrifft das Gebiet der UV-härtenden, beschlagverhindernden Überzüge für Kunststoffe sowie ein Verfahren zur Herstellung von beschlagverhindernden Überzügen unter Verwendung dieser Lacke. Der Begriff "beschlagverhindernd" bedeutet hierbei entweder das vollständige Verhindern des Beschlagens mit kondensierter Feuchtigkeit oder zumindest das Verzögern der Beschlagbildung im Vergleich zum unbeschichteten Material.

### Stand der Technik

Die Verwendung von harten, thermoplastisch verformbaren Kunststoffen findet heute nahezu in jedem Gebiet des täglichen Lebens statt. Ein wichtiger Anwendungsbereich ist z.B. der Verglasungsbereich, bei dem der Ersatz von Mineralglas durch transparente Kunststoffe entweder eine wesentliche Gewichtsersparnis mit sich bringt oder bestimmte Anwendungen durch die leichte Formbarkeit, die verbesserte Bruchfestigkeit, etc. überhaupt erst ermöglicht. Wie auch Mineralglas besitzen Kunststoffe jedoch den gravierenden Nachteil, dass sie bei starken Temperatur- und/oder Feuchtewechseln leicht mit kondensierter Feuchtigkeit beschlagen, da sie naturgemäß nicht die Beschlagfreiheit besitzen, die zum Beispiel die für solche Anwendungen bekannten polaren, aber weichen Materialien auf Cellulose-Basis besitzen. Besonders nachteilig macht sich diese Anfälligkeit gegenüber Beschlagen bei den transparenten Kunststoffen bemerkbar, die für Gegenstände vorgesehen sind, durch die auch bei widrigen Temperatur- und/oder Feuchtigkeitsverhältnissen eine freie Durchsicht erforderlich ist.

Eine derartige nachteilige Wirkung kann z. B. das Beschlagen der Innenseite eines Motorradhelm-Visiers durch die Atemluft sein, wodurch eine Gefährdung des Benutzers durch die starke Beeinträchtigung der Sichtverhältnisse hervorgerufen wird. Das gleiche gilt für Schutz- oder Sportbrillen, die unter niedrigen Umgebungstemperaturen und/oder bei starkem Schwitzen des Trägers von innen beschlagen können.

Die Überwindung dieses Nachteils kann entweder dadurch geschehen, dass man als Basismaterial einen Kunststoff mit inhärent vorhandenen beschlagverhindernden Eigenschaften wählt, oder indem ein Basismaterial mit nicht beschlagverhindernden Eigenschaften mit einer Beschichtung versehen wird, die die gewünschten Eigenschaften besitzt.

Geeignete Basismaterialien mit beschlagverhindernder Wirkung sind z. B. teilhydrolysierte Zellulose-Propionate. Diese Polymere sind jedoch sehr weich und quellen unter Feuchtigkeitseinfluß sehr stark an. Mit ihnen lassen sich daher nur Teile herstellen, die eine geringe mechanische Stabilität besitzen und die nur bescheidenen Ansprüchen in Bezug auf ihre Optik genügen können, da sie in der Durchsicht merkliche Verzerrungen aufweisen. Durch die weiche Oberfläche wird auch nur eine sehr geringe Dauergebrauchstauglichkeit erreicht.

Wesentlich vorteilhafter ist es daher, auf ein hartes, thermoplastisch verarbeitbares Basismaterial eine geeignete Schicht aufzubringen, die die gewünschten Eigenschaften besitzt. Die Härtung dieser Schicht kann sowohl durch Verdunsten eines Lösungsmittels, durch Härtung mit energiereichen Strahlen (z. B. UV-Strahlung) als auch mittels thermischer Härtung erfolgen.

Beispiele für die Beschichtung mit Lacken, die hydrophile Monomeren wie N-Vinyl-Pyrollidon enthalten, finden sich z. B. in JP 88 247 036 oder in EP 399 441. Als weitere hydrophile Comonomere wurden in der Vergangenheit eingesetzt: Vinylisch ungesättigte Ester der Phosphorsäure (EP-A 12948, JP 93 186 620), stickstoffhaltige Monomere (EP 444 864, JP 92 393 78) sowie ungesättigte Carbonsäuren bzw. deren Salze (EP 317 410).

Eine weitere Möglichkeit zum Erhalt einer beschlagverhindernden Beschichtung ist der Zusatz von hydrophilen Metalloxiden zu Überzugsmitteln, die gegebenenfalls auch noch die vorstehend beschriebenen hydrophilen Monomeren enthalten können (DE 38 05 886, EP 374 516, EP 571 808).

Die vorstehend beschriebenen Ansätze zur Lösung der Beschlagsproblematik besitzen jedoch verschiedene Nachteile. Während besonders die unter Verwendung von stickstoffhaltigen Monomeren hergestellten Lacke bei Bewitterung zu starker Vergilbung neigen, ist all diesen Lacken gemeinsam, dass sie eine schlechte Haftung auf Kunststoffen wie Polymethylmethacrylat oder Polycarbonat besitzen.

Dieser Effekt verstärkt sich noch zusätzlich, wenn die beschichteten Teile einer Temperatur- und/oder Feuchtigkeitsbelastung ausgesetzt werden. In diesen Fällen tritt teilweise schon nach kurzer Zeit eine Ablösung der funktionalen Schicht von dem darrunterliegenden polymeren Basismaterial auf.

EP 652 249 beschreibt Gegenstände, bestehend aus einem Polymethylmethacrylat-Grundkörper und einer beschlag-verhindernden Beschichtung, die zusammengesetzt ist aus: a) 50 - 70 % (Meth)acrylsäureester, die sich von C₂ - C₁₈ aliphatischen Glycolen oder von 1 - 6 C₂ - C₄ Alkylenoxideinheiten und b) 10 - 30 % gegebenenfalls ethoxylierten Hydroxyalkylestern und d) von 1 - 10 % eines mindestens trifunktionellen (Meth)acrylat-vernetzers, wobei es für die beschlagverhindernde Wirkung der Beschichtung essentiell ist, dass c) von 10 - 30 % gegebenenfalls teilweise neutralisierte (Meth)acrylsäure und e) 0,01 - 3 % hydrophile kolloidale Metalloxide in der Mischung enthalten sind. Durch die Anwesenheit der Komponenten c) und e) haften auch diese Schichten nur sehr schlecht bei Temperatur- und/oder Feuchtigkeitsbelastungen auf den Substraten.

JP 76 633 82 beschreibt hydrophile und beschlagresistente Filme, die im wesentlichen aus hydrophilen monofunktionellen Monomeren und nur wenig Polyalkylenoxid-(meth)-acrylatvernetzern bestehen. Aufgrund des niedrigen Gehalts an Di(meth)acrylat sind diese Schichten jedoch nur wenig vernetzt und daher weich und leicht quellbar.

Es wäre daher wünschenswert, für Formkörper aus Polycarbonat (PC) oder Polymethylmethacrylat (PMMA) eine Beschichtung zu besitzen, die eine möglichst gute beschlagverhindernde Wirkung aufweist und unter allen Einsatzbedingungen eine möglichst hohe Haftung besitzt.
Beschichtungen, die aus dem Stand der Technik bekannt sind, haften entweder gut bei nur mäßiger beschlagverhindernder Wirkung oder - falls diese gut ist - lösen sie sich leicht bei Temperatur- und/oder Feuchtigkeitsbelastung vom Substrat. Gleichfalls sollte diese Beschichtung auch nach kurzer Einwirkungszeit von Wasser weder ihre beschlagverhindernde Wirkung verlieren noch durch die Wasseraufnahme ihre optischen Eigenschaften verändern.

### Aufgabe und Lösung

Es bestand daher die Aufgabe, für PMMA und PC ein Beschichtungssystem zu entwickeln, das eine möglichst gute beschlagverhindernde Wirkung hat und sich nicht bei Temperaturund/oder Feuchtigkeitsbelastungen vom Substrat ablöst.

Die beschlagverhindernde Wirkung derartiger Schichten wird sowohl durch die Monomerzusammensetzung der Schicht als auch durch die erzielbare Schichtdicke der funktionellen Schicht erreicht. Erstere garantiert eine schnelle und spezifisch hohe Wasseraufnahme, während die Schichtdicke naturgemäß die Masse des aufnehmenden Mediums vorgibt.

Neben der Entwicklung einer optimal wirksamen Monomerzusammensetzung war daher besonders das bei den Beschichtungen des Standes der Technik bestehende Problem zu lösen, dass man entweder nur geringe Schichtdicken mit guter Haftung oder aber größere Schichtdicken mit dann nur schlechter Haftung realisieren konnte.

Die zu entwickelnden Schichten sollten möglichst unempfindlich gegenüber Temperatur- und Feuchtewechseln sein. Entsprechend den späteren Einsatzbedingungen sollten weder wechselnde Temperaturen noch hohe Feuchtigkeitsbelastungen - im Extremfall bis hin zur direkten Einwirkung von Wasser auf die Schicht - einen negativen Einfluß auf die Haftung besitzen.
Idealerweise sollten die Schichten sogar möglichst unempfindlich gegenüber den noch schärferen Bedingungen eines anwendungstechnischen Tests sein, der aus mehrfachem Wechsel zwischen 7-stündiger Lagerung der Substrate in heißem Wasser (50 °C) und 17-stündiger Lagerung an Luft bei Raumtemperatur besteht.

Ein weiteres wichtiges Kriterium stellt das Erzielen und das Beibehalten einer möglichst glatten Oberfläche, d.h. einer möglichst guten optischen Qualität der beschichteten Gegenstände dar. Neben einer guten Verarbeitbarkeit beim Lackauftrag sollte sich die gute optische Qualität dann insbesondere nicht durch die Wasseraufnahme, z. B. durch Schlierenbildung, verschlechtern. Auch das Erzielen einer guten Kratzfestigkeit ist für diesen Zweck vorteilhaft.

Die vorstehenden Aufgaben wurde gelöst durch eine Beschichtungszusammensetzung, bestehend aus
a) 70 - 95 Gew.-%, bezogen auf die Summe der Komponenten a) bis e), eines Gemisches aus Polyalkylenoxid-di(meth)acrylaten der Formel (I)

   H₂C=C(R)-C(O)-O-[CH₂-CH₂-O]ₙ-C(O)-C(R)=CH₂ (I)

   mit n = 5 - 30
   und R = H oder CH₃
   wobei
   a1) 50 - 90 Gew.-% des Gemisches der Polyalkylenoxid-di(meth)acrylate der Formel (I) von Polyalkylenoxid-diolen mit einem mittleren Molekulargewicht (Mw) von 300 - 700 und
   a2) 50 - 10 Gew.-% des Gemisches der Polyalkylenoxid-di(meth)acrylate der Formel (1) von Polyalkylenoxid-diolen mit einem mittleren Molekulargewicht (Mw) von 900 - 1300 gebildet werden
b) 1 - 15 Gew.-%, bezogen auf die Summe der Komponenten a) bis e), eines Hydroxyalkyl(meth)acrylats der Formel

   H₂C=C(R)-C(O)-O-[CH₂]ₘ-OH (II)

   mit m = 2 - 6
   und R = H oder CH₃
c) 0 - 5 Gew.-%, bezogen auf die Summe der Komponenten a) bis e), eines Alkanpolyol-poly(meth)acrylats als Vernetzer
d) 0,1 - 10 Gew.-%, bezogen auf die Summe der Komponenten a) bis e), eines UV-Polymerisationsinitiators sowie
e) gegebenenfalls weiteren üblichen Additiven für UV-härtbare Beschichtungen, wie UV-Absorbern und/oder Additiven für Verlauf und Rheologie
f) 0 - 300 Gew.-%, bezogen auf die Summe der Komponenten a) bis e), eines leicht durch Verdunstung entfernbaren Lösungsmittels und/oder 0 - 30 Gew.-%, bezogen auf die Summe der Komponenten a) bis e), eines monofunktionellen Reaktivverdünners.

### Ausführung der Erfindung

### Komponente a)

Die Komponente a) der Beschichtungszusammensetzung besteht aus 70 - 95 Gew.-%, insbesondere 80 bis 94,9 Gew.-%, eines Gemisches aus Polyalkylenoxid-di(meth)acrylaten der Formel

H₂C=C(R)-C(O)-O-[CH₂-CH₂-O]ₙ-C(O)-C(R)=CH₂ (I)

mit n = 5 - 30, n = 6 - 25 oder n = 8 - 23
und R = H oder CH₃
wobei
a1) 50 - 90, bevorzugt 60 - 80 Gew.-%, des Gemisches der Polyalkylenoxid-di(meth)acrylate der Formel (1) von Polyalkylenoxid-diolen mit einem mittleren Molekulargewicht (Mw) von 300 - 700, bevorzugt von 400 - 600 und
a2) 50 - 10, bevorzugt 40 bis 20 Gew.-% der Polyalkylenoxiddi(meth)acrylate der Formel (1) von Polyalkylenoxid-diolen mit einem mittleren Molekulargewicht (Mw) von 900 - 1300, bevorzugt von 1000 bis 1200 gebildet werden.

Das Molekulargewicht ist als Gewichtsmittel zu verstehen und kann durch Gelpermeationschromatographie (GPC) ermittelt werden. Die angegebenen Zahlen bedeuten g/mol.

Die Herstellung der Polyalkylenoxid-diole ist eine literaturbekannte Methode und wird z. B. beschrieben in: Ullmanns Encyclopedia of Industrial Chemistry, VCH Publishers, Inc., Weinheim, Germany, 5^{th} Edition, 1992, Vol. A 21, Seite 579 - 589, oder in: Ullmanns Encyclopädie der technischen Chemie, Verlag Chemie, Weinheim, 4. Auflage, Band 19, Seite 31 - 38, sowie in: Römpp Chemie Lexikon, G. Thieme Verlag, Stuttgart, 1992, Band 5, Seite 3532 und dort angegebene Literatur.

Die zur Herstellung der Polyalkylenoxid-di(meth)acrylate verwendeten Polyalkylenoxid-diole sind jedoch in der Regel als marktgängige Verbindungen allgemein bekannt und werden von verschiedenen Herstellern entsprechend dem Molekulargewicht sortiert angeboten.

Gängige Handelsbezeichnungen sind z. B: PEG 200, PEG 300, PEG 400, PEG 555 M, PEG 600, PEG 1000, PEG 1350, PEG 2000 (Deutsche Shell Chemie GmbH, Fa. Clariant) oder die Handelsmarken: BREOX PEG (BP Chemicals), Plutiol E (BASF AG), EMKAPOL sowie EMKAPYL (beide ICI), bei denen die Produktnamen jeweils aus der Kombination Handelsname und Molekulargewicht gebildet werden (z. B. BREOX PEG 600).

Besonders geeignet sind Polyethylenglycole mit einem mittlerem Molekulargewicht von 400, 600 und 1000 g/mol.

Die Umsetzung dieser Verbindungen zu den entsprechenden Polyalkylenoxid-di(meth)acrylaten kann in bekannter Weise, z. B. gemäß den in den deutschen Patentanmeldungen mit den Veröffentlichungsnummern 34 23441, 34 23443, 40 10161 oder 1 96 02035 oder in: "J.K. Haken, Synthesis of Acrylic Esters by Transesterification, Noyes Development Corp., Park Ridge NJ, USA, 1967 beschriebenen Methoden erfolgen. Eine geeignete Herstellungsweise ist z.B. die Umesterung von niederen (Meth)acrylsäureestern wie Methylmethacrylat oder Butylacrylat mit den entsprechenden Diolen in Gegenwart von Umesterungskatalysatoren. In einer besonders vorteilhaften Ausführungsform wird die Umesterung in Gegenwart von Tetraisopropyltitanat als Katalysator vorgenommen.

Es kann sich auch als vorteilhaft erweisen, wenn eine Komponente a) eingesetzt wird, die gewonnen wird, indem die entsprechenden Polyalkylenoxid-diole aus a1) und a2) zuerst gemischt werden und dann diese Mischung zu einem Gemisch von Polyalkylenoxid-di(meth)acrylaten umgesetzt wird. In diesem Fall wird also nicht ein Polyalkylenoxid-diol mit einem mittleren Molekulargewicht (Mw) von 300 bis 700 in das entsprechende Polyalkylenoxid-di(meth)acrylat umgewandelt und dann in der Beschichtungszusammensetzung in den angegebenen Mengenverhältnissen mit einem Polyalkylenoxid-di(meth)acrylat eingesetzt, welches ausgehend von einem Polyalkylenoxid-diol mit einem mittleren Molekulargewicht (Mw) von 900 bis 1300 hergestellt wurde. In dieser Ausführungsform wird zuerst eine Mischung der beiden in a1) und a2) bezeichneten Polyalkylenoxid-diole hergestellt und diese Mischung dann unter den bekannten Bedingungen in ein entsprechendes Polyalkylenoxid-di(meth)acrylat-Gemisch umgesetzt. Durch diese Maßname kann auch in einigen Fällen eine vollständigere Umsetzung bei der Veresterungs- oder Umesterungsreaktion erreicht werden. Auch kann es sich als günstig erweisen, wenn als Komponente a) für a1) und a2) nicht gleichzeitig nur Acrylate oder nur Methacrylate eingesetzt werden, sondern wenn eine Komponente a) eingesetzt wird, bei der eine der Komponenten a1) oder a2) ein Polyalkylenoxid-diacrylat ist und die andere Komponente ein Polyalkylenoxid-dimethacrylat ist.

### Komponente b)

Die Komponente b) der Beschichtungszusammensetzung besteht aus 1 - 15, 2 - 10 oder 3 - 6 Gew.-%, eines Hydroxyalkyl(meth)acrylats der Formel (II)

H₂C=C(R)-C(O)-O-[CH₂]ₘ-OH (II)

mit m = 2-6
und R = H oder CH₃

Beispielhaft für Vertreter der Komponente b) seien die (Meth)acrylate mit einer terminalen OH-Gruppe im Alkylrest genannt, z. B. das 2-Hydroxyethylmethacrylat bzw. das -acrylat, das 3-Hydroxypropylmethacrylat bzw. -acrylat oder das 4-Hydroxybutylmethacrylat bzw. -acrylat, die gegebenenfalls auch als Gemische eingesetzt werden können. Besonders bevorzugt als Komponente b) ist das 2-Hydroxyethylmethacrylat.

### Komponente c)

Die Komponente c) der Beschichtungszusammensetzung besteht aus bis zu 5 Gew.-%, insbesondere aus 0,01 - 5 Gew.-%, oder aus 0,1 bis 3,0 Gew.-% eines Alkanpolyol-poly(meth)acrylats als Vernetzer. Geeignet sind z.B. die Diester und höheren Ester der Acryl- bzw. Methacrylsäure von mehrwertigen Alkoholen wie 1,2-Ethandiol, den höheren linearen α,ω-Alkandiolen mit 3 bis 12 Kohlenstoffatomen, Glycerin, Trimethylolethan, Trimethylolpropan, Pentaerythrit, Diglycerin, Dimethylolpropan, Ditrimethylolethan, Dipentaerythrit, Trimethylhexandiol-1,6 oder Cyclohexandiol-1,4.

Geeignete Verbindungen sind z. B. Ethylenglykoldiacrylat, Ethylenglykoldimethacrylat, Propylenglykoldiacrylat, Propylenglykoldimethacrylat, 1,3-Butandioldiacrylat, 1,3-Butandioldimethacrylat, 1,4-Butandioldiacrylat, 1,4-Butandioldimethacrylat, Neopentylglykoldiacrylat, Neopentylglykoldimethacrylat, Diethylenglykoldiacrylat, Diethylenglykoldimethacrylat, Tetraethylenglykoldiacrylat, Tetraethylenglykoldimethacrylat, 1,5-Pentandioldiacrylat, 1,5-Pentandioldimethacrylat, 1,6-Hexandioldiacrylat, 1,6-Hexandioldimethacrylat, Trimethylolpropantriacrylat, Trimethylolpropantrimethacrylat, Ditrimethylolpropantetraacrylat, Ditrimethylolpropantetramethacrylat, Dipentaerythrithexaacrylat und Dipentaerythrithexamethacrylat, sowie Pentaerythrittriacrylat und Pentaerythrittrimethacrylat, Pentaerythrittetraacrylat und Pentaerythrittetramethacrylat, die auch in Form verschiedener Mischungen der Tri- und Tetraacrylate bzw. Tri- und Tetramethacrylate des Pentaerythritols erhältlich sind. Die Vernetzer können ebenfalls als Mischungen eingesetzt werden. Bevorzugt ist 1,6-Hexandiol-diacrylat.

### Komponente d)

Die Komponente d) der Beschichtungszusammensetzung besteht aus 0,1 - 10 Gew.-%, bevorzugt 0,5 - 7 Gew.-% und besonders bevorzugt 1- 5 Gew.-% eines UV-Polymerisationsinitiators. Dieser dient zur Aushärtung der Beschichtungszusammensetzung unter Einwirkung von UV-Licht. Es handelt sich um Verbindungen, die unter UV-Einstrahlung Radikale abspalten und so die Polymerisation des Beschichtungsmittels initiieren. Gebräuchliche UV-Initiatoren sind gemäß der DE-OS 29 28 512 z.B. Benzoin, 2-Methylbenzoin, Benzoin-methyl-, -ethyl oder -butylether, Acetoin, Benzil, Benzil-dimethylketal oder Benzophenon. Ebenfalls geeignet sind Phenyl-2-hydroxy-2-propyl-keton, 1-(4-Isopropyl)-2-hydroxy-2-methylpropan-1-on, 1-Hydroxy-cyclohexyl-phenyl-keton, 2-Methyl-1-[4-(methylthio)phenyl]-2-morpholinopropanon-1,2,4,6-Trimethylbenzoyldiphenyl-phosphinoxid und Bis-(2,4,6,-trimethylbenzoyl)-phenylphosphinoxid. Diese Verbindungen können jeweils alleine oder gegebenenfalls auch als Mischungen eingesetzt werden. Zur Härtung in Gegenwart von Luftsauerstoff können auch besonders vorteilhaft einzelne Initiatoren oder Mischungen der vorgenannten Initiatoren mit verschiedenen, dem Fachmann geläufigen Aminverbindungen eingesetzt werden.

Besonders geeignet ist 1-(4-Isopropyl)-2-hydroxy-2-methylpropan-1-on.

### Komponente e): Übliche Additive

Unter üblichen Additiven sollen für Beschichtungsmittel gebräuchliche Zusätze verstanden werden, wie sie z.B. auch für Kratzfestbeschichtungen bekannt sind. Die Menge der zugesetzten Additive kann in Summe bis 20 Gew.-%, bevorzugt bis 10 Gew.-% betragen. Die Verwendung dieser Additive wird jedoch als nicht kritisch für die Erfindung angesehen.

Hier sind z.B. oberflächenaktive Substanzen zu nennen, mit deren Hilfe die Oberflächenspannung der Beschichtungsformulierung reguliert und gute Auftrags-, Benetzungs- und/oder Verlaufseigenschaften erreicht werden können. Hierfür können z.B. gemäß der EP 034 272 z.B. Silikone, wie verschiedene Polymethylsiloxan-Typen in Konzentrationen von 0,0001 bis 2 Gew.-% verwendet werden.

Ein weiteres, sehr gebräuchliches Additiv sind UV-Absorber, die in Konzentrationen von 1 bis 20 Gew.-%, vorzugsweise von 1 bis 10 Gew.-% und besonders bevorzugt von 2 - 6 Gew.-% enthalten sein können. UV-Absorber können z.B. aus der Gruppe der Hydroxybenzotriazole ausgewählt werden (siehe z. B. EP 247 480). Es kann sich auch als vorteilhaft erweisen, eine Mischung mehrerer UV-Absorber zu verwenden, die entweder vom gleichen Verbindungstyp oder aber verschiedener chemischer Struktur sind.

### Komponente f)

Die Beschichtungszusammensetzung kann entweder nur aus den Verbindungen a) bis e) bestehen oder noch f) bis zu 300 Gew.-%, bevorzugt bis zu 200 Gew.-% , bezogen auf a) bis e), eines leicht durch Verdunstung entfernbaren Lösungsmittels enthalten. Dies entspricht einem Gehalt von bis zu 75 Gew.-%, bevorzugt von bis zu etwa 67 Gew.-% flüchtigem Lösungsmittel bezogen auf die Gesamtmischung.

In EP 035 272 werden gebräuchliche organische Lösungsmittel für Beschichtungsmittel für Kratzfestlacke beschrieben, die als Verdünner verwendet werden können. Geeignet sind z.B. Alkohole, aromatische Lösungsmittel, Ketone, Etherverbindungen oder Esterverbindungen. Die Verbindungen können allein oder in Kombination eingesetzt werden. Beispiele für die vorstehenden Lösungsmittel sind z.B. Ethanol, Isopropanol, n-Propanol, Isobutylalkohol, n-Butylalkohol, Toluol, Xylol, Methylethlyketon, Methylisopropylketon, Methoxypropanol, Tetrahydrofuran, Ethylacetat, n-Butylacetat oder Ethlypropionat.

Besonders bevorzugt sind Ethanol und Isopropanol.

Als Verdünner können gegebenenfalls auch monofunktionelle Reaktivverdünner verwendet werden. Die monofunktionellen Reaktivverdünner können in Kombination zu guten Verlaufseigenschaften des Lackes und damit zu einer guten Verarbeitbarkeit beitragen.

Die monofunktionellen Reaktivverdünner besitzen eine radikalisch polymerisierbare Gruppe, in der Regel eine Vinyl-Funktion. Als solche Verbindungen können z.B. eingesetzt werden: n-Butylacrylat, 2-Ethoxymethylethlymethacrylat, Methylmethacrylat, tert-Butylmethacrylat oder lsobornylmethacrylat. Übliche Einsatzmengen sind z. B. bis zu 30 Gew.-%, bis zu 20 Gew.-% oder bis zu 10 Gew.-% bezogen auf die Komponenten a) bis e).

Mit Hilfe der Lösungsmittel bzw. Reaktivverdünner wird eine Viskosität des Beschichtungsmittels im Bereich von ca. 10 bis ca. 250 mPa·s eingestellt. Für Beschichtungsmittel, die für Flut- oder Tauchbeschichtungen vorgesehen sind, sind eher niedrige Viskositäten von etwa 1 - 20, bevorzugt von 5 - 10 mPa·s gebräuchlich. Bei diesen Lacken können vor allem organische Lösungsmittel in bis zu 300 Gew.-%, bevorzugt bis zu 200 Gew.-%, bezogen auf die Komponenten a) bis e) eingesetzt werden. Für Rakelbeschichtungen oder Walzenauftragsbeschichtungen liegen die geeigneten Viskositäten im Bereich von 20 bis 250 mPa·s. Die angegebenen Werte sind lediglich als Richtwerte zu verstehen und beziehen sich auf die Messung der Viskosität bei 20 °C mit einem Rotationsviskosimeter gemäß DIN 53 019.

Bei Lacken für Walzenauftragsverfahren werden bevorzugt monofunktionelle Reaktivverdünner eingesetzt. Übliche Konzentrationen liegen zwischen 0 bis 30 Gew.-%, bezogen auf die Summe der Komponenten a) bis e). Alternativ oder in Kombination können hierfür jedoch auch organische Lösungsmittel als Verdünner verwendet werden.

### Herstellung der Beschichtungszusammensetzung

### Beschichtung von Oberflächen

Das erfindungsgemäße Beschichtungsmittel kann grundsätzlich zur Beschichtung von allen Materialien eingesetzt werden, eignet sich jedoch aufgrund der guten optischen Eigenschaften besonders für transparente Materialien, und hierbei insbesondere zur Beschichtung von Formkörpern aus transparentem, thermoplastischem Kunststoff. Beispiele für geeignete Kunststoffe sind Polymethylmethacrylat, Polycarbonat, Polystyrol, Polyvinylchlorid, Polyethylenterephthalat, glykolmodifiziertes Polyethylenterephthalat (PETG), Polybutylenterephthalat oder Acrylnitril/Butadien/Styrol-Copolymere (ABS). Besondere Vorteile ergeben sich bei der Beschichtung von Folien aus Polymethylmethacrylat oder Polycarbonat.

Das Beschichtungsmittel soll so auf Kunststoffkörper, z. B. eine Folie zur Herstellung von Schutzbrillen oder von Helmvisieren, aufgebracht werden, dass die Schichtdicke der ausgehärteten Schicht 1 bis 50 µm, bevorzugt 3 bis 30 µm und besonders bevorzugt 5 bis 20 µm beträgt. Bei Schichtdicken unter 1 µm ist der Beschlagschutz und die Kratzfestigkeit unzureichend, bei Schichtdicken von über 50 µm kann es zu Rißbildungen bei Biegebeanspruchung kommen.

Mögliche Auftragsverfahren sind das Aufsprühen, Rakeln, Tauchen, Fluten oder das Walzenauftragsverfahren. Das erfindungsgemäße Beschichtungsmittel ist für alle genannten Verfahren geeignet, insbesondere jedoch für das Flut- und Tauchverfahren. Es eignet sich jedoch auch für das Walzenauftragsverfahren, bei dem im allgemeinen Lacke mit höheren Viskositäten als bei den anderen Verfahren zur Anwendung kommen. Wenn besonders hohe Viskositäten benötigt werden, können diese gegebenenfalls leicht mittels zusätzlicher Verwendung eines polymeren Verdickers eingestellt werden.

Nach dem Auftragen des Lackfilms auf den Kunststoffkörper erfolgt die Polymerisation mittels UV-Strahlung. Die Polymerisation kann vorteilhaft unter inerter Atmosphäre zum Ausschluß des inhibierenden Luftsauerstoffs, z.B. unter Stickstoffbegasung, durchgeführt werden. Dies ist jedoch keine unabdingbare Voraussetzung.

Üblicherweise wird die Polymerisation bei Temperaturen unterhalb der Glastemperatur des Kunststoffkörpers vorgenommen. Die zum Aushärten notwendige UV-Bestrahlungsdauer hängt ab von der Temperatur und der chemischen Zusammensetzung des Beschichtungsmittels, vom Absorptionsverhalten des eingesetzten UV-Initiators, von der Art und Leistung der UV-Quelle, von deren Abstand zum Beschichtungsmittel und davon, ob eine Inertatmosphäre vorliegt oder nicht. Als Richtwert können einige Sekunden bis wenige Minuten gelten. Die entsprechende UV-Quelle soll eine Strahlung im Bereich von ca. 150 bis 400 nm, bevorzugt mit einem Maximum zwischen 250 und 280 nm abgeben, wobei die Strahlung mittels Reflektoren in einem schmalen Bereich auf dem beschichteten Substrat fokussiert werden kann oder als nicht fokussierte Flächenstrahlung auf die beschichtete Substratoberfläche einwirken kann.

Die eingestrahlte Energie soll ca. 50 - 2.000 mJ/cm² betragen. Als Richtwert für den Abstand der UV-Quelle zur Lackschicht können ca. 100 bis 200 mm angegeben werden. Es können sowohl UV-Strahler mit einem relativ breiten Emissionsspektrum verwendet werden als auch solche, die praktisch nur eine Wellenlänge emittieren. Beispiele für Strahler mit einem relativ breiten Emissionsspektrum sind Quecksilberdampf-Entladungslampen, die üblicherweise mit Hochdruck-, Mitteldruck- oder Niederdruck-Entladungsröhren erhältlich sind sowie die sogenannten Excimer-UV-Strahler, die abhängig von der Gasfüllung der Entladungsröhre verschiedene, jeweils eng begrenzte Wellenlängenbereiche emittieren.

### Vorteilhafte Wirkungen der Erfindung

Die erfindungsgemäße Beschichtungszusammensetzung ermöglicht es, gute beschlagverhindernde Eigenschaften bei gleichzeitig guter Haftung der Schicht auf dem Substrat zu erreichen. Die Beschichtungen haften hervorragend sowohl im feuchten, d.h. gequollenen Zustand, als auch nach mehreren erfolgten Feuchtewechseln und/oder thermischen Belastungen. Unter Feuchtewechseln wird hierbei entweder die Aufnahme kondensierender Feuchtigkeit, gegebenenfalls bis hin zur Bildung von Kondensattröpfchen auf der Beschichtung bei Übersättigung und die anschließende Wiederabgabe der Feuchtigkeit verstanden, es kann aber auch wechselnde Lagerung des beschichteten Gegenstandes in temperiertem Wasser und anschließende Abgabe der hier aufgenommenen Feuchtigkeit durch Trocknen an Luft bedeuten. Die thermische Belastung kann hierbei sowohl trockene als auch feuchte Lagerung bei verschiedenen Temperaturen bedeuten. In gleicher Weise wie die Haftung verschlechtert sich unter vorgenannten Belastungen auch die Wirkung der erfindungsgemäßen Schichten nicht, was sich in einer unveränderten Beschlagfreizeit nach wiederholten Wechseln ausdrückt. Die hohe optische Qualität der erfindungsgemäß erreichbaren Schichten wird dadurch ebenfalls nicht negativ beeinflusst. Somit eignen sich die erfindungsgemäßen Beschichtungen besonders zur Herstellung von beschichteten Formkörpern, die zur Herstellung von Brillen, Visieren, Instrumenten-verglasungen oder transparenten Abdeckungen verwendet werden können.

### BEISPIELE

### Allgemeine Vorbemerkungen:

### Messung der Beschlagfreizeit:

Die Messung erfolgt gemäß EN 168, 16.1 - 16.3. Es ist allgemein bekannt, dass das Flut- bzw. Tauchverfahren zu einer keilförmigen Schichtdickenverteilung längs der beschichteten Platte führen kann, so dass die Messwerte eines Probekörpers innerhalb eines gewissen Bereiches streuen können.

### Wasserlagerungstest:

Die beschichteten Platten werden 7 h in auf 50 °C ± 1 °C temperiertem Wasser (vollentsalztes Wasser) und anschließend 17 h bei Raumtemperatur außerhalb des Wasserbades an der Luft gelagert. Danach wird die Haftung der Schicht durch Gitterschnittprüfung gemäß EN ISO 2409 und anschließendem Klebebandtest (Transparentes Selbstklebeband, 25 mm breit, Klebekraft gemäß EC 454-2 von 10 ± 1 N je 25 mm) geprüft. Wenn sich die Beschichtung nicht ablöst (GT 0), wird der vorstehend beschriebene Zyklus so lange wiederholt, bis sich die Beschichtung beim Durchführen der Gitterschnittprüfung teilweise ablöst (GT 2 - 3). Die Anzahl der ohne Versagen der Beschichtung (GT 0) durchlaufenen Zyklen wird als Testergebnis angegeben.

### Kratzfestigkeit:

Die Prüfung auf Kratzfestigkeit erfolgt durch Messung der Trübungszunahme infolge Verkratzung im Reibradverfahren nach DIN 52347-100-K-A (Belastung 2,7 N/Rad).

### Beispiel 1:

Eine Mischung der folgenden Komponenten wird hergestellt:

| | | |
|---|---|---|
| 59,3 | Gew.-% | Polyethylenglycol 400-Diacrylat (n = ca. 8 - 9,) |
| 25,8 | Gew.-% | Polyethylenglycol 1000-Dimethacrylat (n = ca. 22) |
| 12,9 | Gew.-% | 2-Hydroxyethylmethacrylat |
| 0,2 | Gew.-% | Polyethersiloxan-Verlaufshilfsmittel (z. B. BYK® 335) |
| 1,8 | Gew.-% | Phenyl-2-hydroxy-2-propyl-keton (z. B. Darocur® 116) |

Dieses Gemisch wird mit Ethanol im Gewichtsverhältnis 1 : 1,65 verdünnt, mittels Flutbeschichtung auf eine Platte Makrolon® 281 (Fa. Röhm GmbH, Darmstadt) aufgebracht und nach einer Ablüftzeit von 2 Minuten mit einem
F 450-UV-Strahler der Fa. Fusion Systems ausgehärtet (120 W/cm, 1 m/min Vorschubgeschwindigkeit, N₂-Inertisierung). Die ausgehärtete Lackschicht der beschichteten Platte zeigt keine Verlaufsstörungen bei guter Anfangshaftung (GT 0) und besitzt eine Beschlagfreizeit von 6 Sekunden (s) und eine Beständigkeit im Wasserlagerungstest von 9 Zyklen.

### Beispiel 2:

Eine Mischung der folgenden Komponenten wird hergestellt:

| | | |
|---|---|---|
| 59,0 | Gew.-% | Polyethylenglycol 400-Diacrylat (n = ca. 8 - 9,) |
| 25,5 | Gew.-% | Polyethylenglycol 1000-Dimethacrylat (n = ca. 22) |
| 12,5 | Gew.-% | 2-Hydroxyethylmethacrylat |
| 1,0 | Gew.-% | 1,6-Hexandioldiacrylat |
| 0,2 | Gew.-% | Polyethersiloxan-Verlaufshilfsmittel (z. B. BYK® 335) |
| 1,8 | Gew.-% | Phenyl-2-hydroxy-2-propyl-keton (z. B. Darocur® 1116) |

Dieses Gemisch wird mit Ethanol im Gewichtsverhältnis 1 : 1,65 verdünnt, mittels Flutbeschichtung auf eine Platte Makrolon® 281 (Fa. Röhm GmbH, Darmstadt) aufgebracht und nach einer Ablüftzeit von 2 Minuten mit einem
F 450-UV-Strahler der Fa. Fusion Systems ausgehärtet (120 W/cm, 1 m/min Vorschubgeschwindigkeit, N₂-Inertisierung). Die ausgehärtete Lackschicht der beschichteten Platte zeigt keine Verlaufsstörungen bei guter Anfangshaftung (GT 0) und besitzt eine Beschlagfreizeit von 6 Sekunden (s) und eine Beständigkeit im Wasserlagerungstest von 12 Zyklen.

### Beispiel 3 (Vergleichsbeispiel)

Eine Mischung der folgenden Komponenten wird hergestellt:

| | | |
|---|---|---|
| 98 | Gew.-% | Polyethylenglycol 600-Diacrylat (n = ca. 13,3) |
| 1,8 | Gew.-% | Phenyl-2-hydroxy-2-propyl-keton (z. B. Darocur® 1116) |
| 0,2 | Gew.-% | Polyethersiloxan-Verlaufshilfsmittel (z. B. BYK® 335) |

Dieses Gemisch wird mit Ethanol im Gewichtsverhältnis 1 : 2 verdünnt, wie in Beispiel 1 auf eine Platte Makrolon® 281 aufgebracht und ausgehärtet. Die beschichtete Platte zeigt keine Verlaufsstörungen bei guter Anfangshaftung (GT 0), besitzt eine Beschlagfreizeit von 5 s, jedoch nur eine Wasserlagerungstest-Beständigkeit von 5 Zyklen.

### Beispiel 4 (Vergleichsbeispiel)

Eine Mischung der folgenden Komponenten wird hergestellt:

| | | |
|---|---|---|
| 98 | Gew.-% | Polyethylenglycol 1000-Dimethacrylat (n = ca. 22) |
| 1,8 | Gew.-% | Phenyl-2-hydroxy-2-propyl-keton (z. B. Darocur® 1116) |
| 0,2 | Gew.-% | Polyethersiloxan-Verlaufshilfsmittel (z. B. BYK® 354) |

Dieses Gemisch wird mit Ethanol im Gewichtsverhältnis 1 : 2 verdünnt, wie in Beispiel 1 auf eine Platte Makrolon® 281 aufgebracht und ausgehärtet. Die beschichtete Platte zeigt keine Verlaufsstörungen bei guter Anfangshaftung (GT 0), besitzt eine Beschlagfreizeit von 9 s, löst sich jedoch im Wasserlagerungstest bereits im Verlauf des ersten Zyklus ab.

### Beispiel 5 (Vergleichsbeispiel):

Eine Mischung der folgenden Komponenten wird hergestellt:

| | | |
|---|---|---|
| 68,3 | Gew.-% | Polyethylenglycol 400-Diacrylat (n = ca. 8 - 9,) |
| 29,7 | Gew.-% | Polyethylenglycol 1000-Dimethacrylat (n = ca. 22) |
| 0,2 | Gew.-% | Polyethersiloxan-Verlaufshilfsmittel (z. B. BYK® 335) |
| 1,8 | Gew.-% | Phenyl-2-hydroxy-2-propyl-keton (z. B. Darocur® 1116) |

Dieses Gemisch wird mit Ethanol im Gewichtsverhältnis 1 : 1,65 verdünnt, mittels Flutbeschichtung auf eine Platte Makrolon® 281 (Fa. Röhm GmbH, Darmstadt) aufgebracht und nach einer Ablüftzeit von 2 Minuten mit einem
F 450-UV-Strahler der Fa. Fusion Systems ausgehärtet (120 W/cm, 1 m/min Vorschubgeschwindigkeit, N₂-Inertisierung). Die ausgehärtete Lackschicht der beschichteten Platte zeigt keine Verlaufsstörungen bei guter Anfangshaftung (GT 0) und besitzt eine Beschlagfreizeit von 6 Sekunden (s), löst sich jedoch im Wasserlagerungstest bereits im Verlauf des ersten Zyklus ab.

### Beispiel 6:

Eine Mischung von 1500 g Polyethylenglycol 1000 (n = ca. 22,3) und 2856 g Polyethylenglycol 400 (n = ca. 8 - 9) wird mit 10850 g n-Butylacrylat in Gegenwart von 304 g Tetraisopropyltitanat unter vermindertem Druck zum entsprechenden Diacrylat-Gemisch umgesetzt. Die Durchführung der Reaktion sowie die anschließende Aufarbeitung erfolgt in der üblichen, dem Fachmann geläufigen Weise, wie z.B. in: "J.K. Haken, Synthesis of Acrylic Esters by Transesterification" beschrieben.

Eine Beschichtungszusammensetzung aus

| | | |
|---|---|---|
| 36,13 | Gew.-% | des so hergestellten Diacrylat-Gemischs |
| 5,11 | Gew.-% | 2-Hydroxyethylmethacrylat |
| 0,43 | Gew.-% | 1,6-Hexandioldiacrylat |
| 0,85 | Gew.-% | Phenyl-2-hydroxy-2-propyl-keton (z. B. Darocur® 1116) |
| 0,04 | Gew.-% | Polyethersiloxan-Verlaufshilfsmittel (z. B. BYK® 320) |
| 57,44 | Gew.-% | Ethanol |

wird wie in Beispiel 1 beschrieben auf eine Platte Makrolon® 281 aufgebracht und ausgehärtet. Die beschichtete Platte zeigt einen sehr guten Verlauf des Lackes, gute Anfangshaftung (GT 0) und besitzt eine Beschlagfreizeit von 9 - 12 s sowie eine Wasserlagerungstest-Beständigkeit von > 25 Zyklen. Die Kratzfestigkeit beträgt τ_{d}-rel = 36,1 %.

### Beispiel 7:

Die in Beispiel 6 beschriebene Mischung wird mit 1,75 Gew.-% Lucirin® TPO (Fa. BASF) als Initiator hergestellt (Ethanolmenge wird entsprechend reduziert) und in gleicher Weise ausgehärtet. In Bezug auf Beschlagfreizeit und Wasserlagerungstest werden die gleichen Testergebnisse erhalten, die Kratzfestigkeit beträgt τ_{d}-rel = 34,5 %.

### Beispiel 8:

Die in Beispiel 6 beschriebene Mischung wird mit 2,5 Gew.-% Irgacure® 819 (Fa. CIBA) als Initiator hergestellt (Ethanolmenge wird entsprechend reduziert) und in gleicher Weise ausgehärtet. In Bezug auf Beschlagfreizeit und Wasserlagerungstest werden die gleichen Testergebnisse erhalten, die Kratzfestigkeit beträgt τ_{d}-rel = 4,2 %.

### Beispiel 9 (Vergleichsbeispiel):

Die in Beispiel 6 beschriebene Mischung wird ohne Zusatz von 2-Hydroxyethylmethacrylat hergestellt (Ethanolmenge wird entsprechend erhöht) und in gleicher Weise aufgetragen und ausgehärtet. Im Wasserlagerungstest löst sich die Beschichtung nach 3 Zyklen ab.

## Patentansprüche

1. Beschichtungszusammensetzung, bestehend aus
a) 70 - 95 Gew.-%, bezogen auf die Summe der Komponenten a) bis e), eines Gemisches aus Polyalkylenoxid-di(meth)acrylaten der Formel (I)
H₂C=C(R)-C(O)-O-[CH₂-CH₂-O]ₙ-C(O)-C(R)=CH₂ (I)
mit n = 5 - 30
und R = H oder CH₃
wobei
a1) 50 - 90 Gew.-% des Gemisches der Polyalkylenoxiddi(meth)acrylate der Formel (1) von Polyalkylenoxid-diolen mit einem mittleren Molekulargewicht (Mw) von 300 - 700 und
a2) 50 - 10 Gew.-% des Gemisches der Polyalkylenoxiddi(meth)acrylate der Formel (1) von Polyalkylenoxid-diolen mit einem mittleren Molekulargewicht (Mw) von 900 - 1300 gebildet werden
b) 1 - 15 Gew.-%, bezogen auf die Summe der Komponenten a) bis e), eines Hydroxyalkyl(meth)acrylats der Formel
H₂C=C(R)-C(O)-O-[CH₂]ₘ-OH (II)
mit m = 2 - 6
und R = H oder CH₃
c) 0 - 5 Gew.-%, bezogen auf die Summe der Komponenten a) bis e), eines Alkanpolyolpoly(meth)acrylats als Vernetzer
d) 0,1 - 10 Gew.-%, bezogen auf die Summe der Komponenten a) bis e), eines UV-Polymerisationsinitiators sowie
e) gegebenenfalls weiteren üblichen Additiven für UV-härtbare Beschichtungen, wie UV-Absorbern und/oder Additiven für Verlauf und Rheologie
f) 0 - 300 Gew.-%, bezogen auf die Summe der Komponenten a) bis e), eines leicht durch Verdunstung entfernbaren Lösungsmittels und/oder 0 - bis 30 Gew.-%, bezogen auf die Summe der Komponenten a) bis e), eines monofunktionellen Reaktivverdünners.

2. Beschichtungszusammensetzung gemäß Anspruch 1, **dadurch gekennzeichnet, dass** als Komponente b) 2-Hydroxyethylmethacrylat eingesetzt wird.

3. Beschichtungszusammensetzung gemäß Anspruch 1, **dadurch gekennzeichnet, dass** als Komponente c) 1,6-Hexandioldiacrylat eingesetzt wird.

4. Beschichtungszusammensetzung gemäß Anspruch 1, **dadurch gekennzeichnet, dass** als monofunktioneller Reaktivverdünner n-Butylacrylat eingesetzt wird.

5. Beschichtungszusammensetzung gemäß Anspruch 1, **dadurch gekennzeichnet, dass** als Lösungsmittel Ethanol und/oder Isopropanol eingesetzt werden.

6. Beschichtungszusammensetzung gemäß Anspruch 1, **dadurch gekennzeichnet, dass** eine Komponente a) eingesetzt wird, die gewonnen wird, indem die entsprechenden Polyalkylenoxid-diole aus a1) und a2) miteinander gemischt werden und dann diese Mischung zu einem Gemisch von Polyalkylenoxiddi(meth)acrylaten umgesetzt wird.

7. Beschichtungszusammensetzung gemäß Anspruch 1, **dadurch gekennzeichnet, dass** eine Komponente a) eingesetzt wird, bei der eine der Komponenten a1) oder a2) ein Polyalkylenoxid-diacrylat ist und die andere Komponente ein Polyalkylenoxid-dimethacrylat ist.

8. Beschichteter Formkörper, bestehend aus einem Trägermaterial aus Kunststoff und einer ausgehärteten Beschichtung gemäß einem der vorstehenden Ansprüche.

9. Beschichteter Formkörper nach Anspruch 8, **dadurch gekennzeichnet, dass** das Trägermaterial Polycarbonat oder Polymethylmethacrylat ist.

10. Verfahren zur Beschichtung eines Formkörpers, **dadurch gekennzeichnet, dass** eine Beschichtungszusammensetzung gemäß den Ansprüchen 1 - 7 auf einen Formkörper aus Kunststoff aufgebracht und anschließend ausgehärtet wird.

11. Verwendung von beschichteten Formkörpern aus Kunststoff, die mit einer Beschichtungszusammensetzung gemäß den Ansprüchen 1 - 7 beschichtet wurden, zur Herstellung von Brillen, Visieren, Instrumentenverglasungen oder transparenten Abdeckungen.

## Claims

1. Coating composition consisting of
a) 70-95 wt.%, based on the sum of components a) to e), of a mixture of polyalkylene oxide di(meth)acrylates of formula (I)
H₂C=C(R)-C(O)-O-[CH₂-CH₂-O]ₙ-C(O)-C(R) =CH₂ (I)
wherein n = 5-30
and R = H or CH₃
wherein
a1) 50-90 wt.% of the mixture of polyalkylene oxide di(meth)acrylates of formula (I) is formed by polyalkylene oxide diols with an average molecular weight (Mw) of 300-700 and
a2) 50-10 wt.% of the mixture of polyalkylene oxide di(meth)acrylates of formula (I) is formed by polyalkylene oxide diols with an average molecular weight (Mw) of 900-1300
b) 1-15 wt.%, based on the sum of components a) to e), of a hydroxy alkyl(meth)acrylate of formula
H₂C=C(R)-C(O)-O-[CH₂]ₘ-OH (II)
wherein m = 2-6
and R = H or CH₃
c) 0-5 wt.%, based on the sum of components a) to e), of an alkane polyolpoly(meth)acrylate as crosslinker
d) 0.1-10 wt.%, based on the sum of components a) to e), of a UV polymerisation initiator and
e) optionally other conventional additives for UV-curable coatings, such as UV absorbers and/or additives for flow and rheology
f) 0-300 wt.%, based on the sum of components a) to e), of a solvent which is easily eliminated by evaporation and/or 0-30 wt.%, based on the sum of components a) to e), of a monofunctional reactive diluter.

2. Coating composition according to claim 1, **characterised in that** 2-hydroxyethyl methacrylate is used as component b).

3. Coating composition according to claim 1, **characterised in that** 1,6-hexanediol diacrylate is used as component c).

4. Coating composition according to claim 1, **characterised in that** n-butylacrylate is used as the monofunctional reactive diluter.

5. Coating composition according to claim 1, **characterised in that** ethanol and/or isopropanol is used as solvent.

6. Coating composition according to claim 1, **characterised in that** a component a) is used which is obtained by mixing the corresponding polyalkylene oxide diols from a1) and a2) with one another and then reacting this mixture to form a mixture of polyalkylene oxide di(meth)acrylates.

7. Coating composition according to claim 1, **characterised in that** a component a) is used wherein one of the components a1) or a2) is a polyalkylene oxide diacrylate and the other component is a polyalkylene oxide dimethacrylate.

8. Coated moulding consisting of a substrate material made of plastics and a cured coating according to one of the preceding claims.

9. Coated moulding according to claim 8, **characterised in that** the substrate material is polycarbonate or polymethyl methacrylate.

10. Process for coating a moulding, **characterised in that** a coating composition according to claims 1 to 7 is applied to a moulding made of plastics and then cured.

11. Use of coated mouldings made of plastics which have been coated with a coating composition according to claims 1 to 7, for the manufacture of spectacles, visors, transparent instrument panels or transparent coverings.

## Revendications

1. Composition de revêtement qui consiste en :
a) 70-95 % en poids par rapport à la somme des composants a) à e), d'un mélange à base de (méth)acrylates de polyalkylèneoxyde de formule (I),
H₂C=C(R)-C(O)-O-[CH₂-CH₂-O]ₙ-C(O)-C(R)=CH₂ (I)
avec n = 5-30, et
R = H ou CH₃
dans laquelle
a1) de 50 à 90 % en poids du mélange des di(méth)acrylates de polyalkylèneoxyde de formule (I) est formé par des polyalkylènediols ayant un poids moléculaire moyen (Mw) de 300 à 700, et
a2) de 50 à 10 % en poids du mélange de di(méth)acrylate de polyalkylèneoxyde de formule (I) est formé par des polyoxydes d'alkylènediols ayant un poids moléculaire moyen (Mw) de 900 à 1300,
b) de 1 à 15 % en poids rapporté à la somme des composants a) à e),
H₂C=C(R)-C(O)-O-[CH₂]ₘ-OH (II)
avec m = 2 à 6, et
R = H ou CH₃
c) de 0 à 5 % en poids rapporté à la somme des composants a) à e) d'un poly(méth)acrylate d'alkanepolyol comme agent réticulant,
d) de 0,1 à 10 % en poids rapporté à la somme des composants a) à e) d'un initiateur de polymérisation par les UV ainsi que,
e) le cas échéant d'autres additifs usuels pour des revêtements durcissables par les UV, comme des agents absorbants pour les UV et/ou des additifs pour l'écoulement de la rhéologie.
f) de 0 à 300 % en poids rapporté à la somme des composants a) à e) d'un solvant facilement éliminable par évaporation et/ou de 0 à 30 % en poids rapporté à la somme des composants a) à e) d'un agent diluant de réactif monofonctionnel.

2. Composition de revêtement conformément à la revendication 1,
**caractérisée en ce que**
comme composant b) on met en oeuvre du méthacrylate de 2-hydroxyéthyle.

3. Composition de revêtement conformément à la revendication 1,
**caractérisée en ce que**
comme composant c) on met en oeuvre du diacrylate de 1,6-hexanediol.

4. Composition de revêtement conformément à la revendication 1,
**caractérisée en ce que**
comme agent diluant de réactif monofonctionnel, on met en oeuvre de l'acrylate de n-butyle.

5. Composition de revêtement conformément à la revendication 1,
**caractérisée en ce que**
comme solvant on met en oeuvre de l'éthanol et/ou de l'isopropanol.

6. Composition de revêtement conformément à la revendication 1,
**caractérisée en ce qu'**
on met en oeuvre un composant a) qui est produit selon un procédé dans lequel les polyoxydes d'akylènediols correspondants provenant de a1) et de a2) sont mélangés les uns avec les autres et ensuite on transforme le mélange en un mélange de di(meth)acrylates de polyoxyde d'alkylène.

7. Composition de revêtement conformément à la revendication 1,
**caractérisée en ce qu'**
on met en oeuvre un composant a) pour lequel un des composants a1) ou a2) est un diacrylate d'oxyde de polyalkylène et l'autre composant un diméthyacrylate de polyoxyde d'alkylène.

8. Solide moulé enduit consistant en un matériau de support en matière plastique et en un revêtement durci complètement, conformément à l'une quelconque des revendications précédentes.

9. Solide moulé enduit selon la revendication 8,
**caractérisé en ce que**
le matériau de support est un polycarbonate ou un polyméthacrylate de méthyle.

10. Procédé d'enduction d'un solide moulé,
**caractérisé en ce qu'**
on applique une composition de revêtement conformément aux revendications 1 à 7, sur un solide moulé en matière plastique et ensuite on le durcit complètement.

11. Utilisation de solides moulés enduits en matière plastique qui ont été enduits avec une composition de revêtement conformément aux revendications 1 à 7, en vue de la production de lunettes, d'appareils de visée, de vitrages pour instruments ou d'écrans transparents.
